# EUROPEAN PATENT SPECIFICATION

(11) **EP 1 197 282 B1**
(45) Date of publication and mention of the grant of the patent: **14.04.2004**
(21) Application number: 01203518.4
(22) Date of filing: 14.09.2001
(51) Int. Cl.: B23D 25/04

(54) **Shear for cutting sheet metal and the like**
Schere zum Teilen von Blechen oder dergleichen
Cisaille pour couper des tôles ou des produits similaires

(30) Priority: 13.10.2000 IT MI002213
(43) Date of publication of application: 17.04.2002
(73) Proprietor: Sacma Macchine per Lamiera SpA, 21020 Crosio della Valle, Varese (IT)
(72) Inventor: Cernuschi, Ettorre, 20010 Bareggio, Milano (IT)
(74) Representative: Ferroni, Filippo

(56) References cited:
- EP-A- 0 418 006
- FR-A- 2 447 769
- US-A- 4 437 372
- US-A- 4 739 490

## Description

The present invention relates to a shear for cutting sheet metal or other similar materials, continuously fed along a processing line.

As is known, the shears considered herein are machines which perform sheet metal cutting likewise ordinary scissors cut a sheet of paper.

Indeed, these shears are provided with two blades which cut the sheet metal in a transverse direction starting from an outer edge thereof, as a result of their reciprocal approaching movement; for this purpose the blades, which are both straight, are inclined during cutting with respect to each other as occurs for scissor blades.

In this respect it just has to be stated that there are various solutions for obtaining the blade inclination required for cutting; indeed it is possible to have shears wherein one blade is inclined with respect to the surface of the sheet metal, or other shears in which one blade is cusp-shaped, i.e. with a profile which has double inclination and is symmetrical with respect to a central longitudinal plane of the sheet metal.

In order to carry out the cutting of the moving material, in these shears it is necessary to synchronise feeding of the sheet metal with the cutting motion of the blades.

Depending on the manner with which synchronization occurs, it is possible to distinguish two different types of machines: rotating shears and so-called "flying" shears.

The first ones are machines wherein the blades are mounted on blade-carrying supports similar to prisms, mounted eccentrically with respect to a corresponding actuating shaft; moreover, the blade-carrying supports are idle with respect to said shaft and are held in position by movable guides, in such a way that their blades are always directed towards the sheet metal to be cut.

In practice, in the rotating shears the blades with the associated blade-carrying supports move (without rotating) along a circular trajectory with a horizontal speed component which, in the cutting zone, is substantially synchronous with the feeding speed component of the sheet metal; in this way said sheet metal is cut as a result of the relative motion of the blades which is perpendicular thereto.

Flying shears, on the other hand, are machines wherein the blades are mounted on a slide arranged as a bridge above the strip of sheet metal being fed, and displaced in a direction parallel thereto with backwards and forwards strokes, several hundred millimetres long.

In order to cut the sheet metal being fed, the slide is made to move at the same speed as the sheet metal and the blades perform the cut with a guillotine movement; only one of the two blades is fixed while the other moves towards it in order to make the cut.

Both types of abovementioned shears are satisfactory as regards carrying out the cut; however, they have some limitations due to their structural and functional complexity.

For example, rotating machines require the synchronisation of the speed of rotation of the cams which actuate the blade-carrying supports; this means that there will inevitably be mechanical transmission elements (gears, connecting rods, cranks and so on) which, in view of the considerable values of the forces and speeds involved, have relevant dimensions and produce corresponding inertias.

An example of this type of shears is described in Italian Patent No. 1,197,525, whose application has been accessible to the public since the end of May 1988.

Flying shears do not have this type of problem or at least they have to a lesser extent; however, these shears are somewhat cumbersome machines given that the slide on which the blades are mounted, nevertheless moves back and forth along the guides which arc several hundred millimetres long.

Moreover the weight and dimensions of said slide are considerable, so that also in this case there are problems for moving it quickly; from the foregoing it can be deduced that the speed of the sheet metal to be cut cannot exceed predefined limits, because otherwise the cutting movements of the slide along the guides might be difficult because of the high inertias involved.

A shear according to the preamble of claim 1 is disclosed in US Patent No. 4,739,490.

Last it should be added that all the known machines, both of the rotating and of the flying type, are not suitable for efficient adjustment of the distance between the blades.

Indeed, as it can easily be understood the shear blades are inevitably subject to wear as a result of their use; it follows that in order to keep the cutting precision of the shears constant, it is necessary to adjust the mutual position of the blades for compensating their variations due to sharpening of the cutting edge, carried out when required.

Moreover, the distance between the blades must be modified according to the variation in the thickness to be cut.

For this purpose, in the current state of the art the use of actuating devices mounted on the blade-carrying supports and controlled remotely, is known; this requires the presence of such devices and various wiring or connections, necessary for operation thereof on parts which move at high-speed and/or are subject to vibrations, thereby rendering these solutions unfit in terms of functionality and reliability.

The present invention aims at remedying this state of the art.

Namely it's an object of the invention to provide shears for cutting sheet metal in motion, having such structural and functional features as to eliminate the problems affecting the known shears mentioned above.

This object is achieved by shears whose characteristing features are set out in the claims which will follow.

The invention as a whole will be better understood in the light of the description given hereinafter and relating to a preferred but not exclusive embodiment thereof, shown in the drawings in which:
- Fig. 1 is a front view of a shear according to the invention;
- Fig. 2 shows a cross-sectional view of this shear taken along the line II-II of Fig. 1;
- Fig. 3 is a cross-sectional view along the line III-III of Fig. 2;
- Fig. 4 shows a variation of the shear of the preceding figures.

The drawings show a shear indicated overall by 1 which comprises a load-bearing structure having a bridge-like configuration, formed by a horizontal beam 2 supported at the ends by uprights 3 and 4 fixed to the ground.

The bridge-like structure supports internally a blade-carrying slide 5, comprising a horizontal longitudinal member 5a to which four vertical columns 5b are fixed.

For this purpose, on the extrados of longitudinal member 5a there are provided rails 7 which are retained by sliding blocks 8, preferably of the recirculating ball-bearing type; in this manner the blade-carrying slide 5 is kept suspended by the coupling between the sliding blocks 8 and the rails 7, thereby resulting free to move transversely with respect to the horizontal beam 2 of the shear.

The sliding blocks 8 are in turn fixed with bolts or the like on a plate 9 having a rectangular form and supported along its longer sides, by two rectilinear support brackets 10 which are arranged on the intrados of the main beam 2 of the bridge-like structure of the shear.

The plate 9 can slide along the support brackets 10 and therefore with its movement it also displaces the blade-carrying slide 5 suspended thereto, in order to perform adjustment of the blades according to the explanation given hereinafter; for this purpose driving means (not shown) are provided in the shear of this example, to displace the plate 9 along the support brackets 10, like rack driving systems or others.

An upper blade 12 of the shear is fixed on the intrados of the longitudinal member 5a; a lower blade 13, on the other hand, is mounted in an opposite position on a movable blade-carrying support 14, operated by eccentric cam mechanisms 15 of the type known per se which act at the ends thereof.

Said mechanisms are installed in the uprights 3 and 4 of the load-bearing structure of the shear, together with the associated mechanical components (bearings, reduction gears, etc.) which serve to put in motion said mechanisms, by means of a shaft 17 crossing the abovementioned bridge-like structure from one side to the other.

This shaft is actuated by an electric motor 18 adjustable in a known manner to vary its speed of rotation during each revolution, for the purpose of synchronising the movements of the blades with the feeding speed of the sheet metal.

Vertical guides 20, along which vertical sliding blocks 21 integral with the blade-carrying support 14 can slide, are mounted on the inner side of each of the columns 5b of the blade-carrying slide 5; also these sliding blocks are of the recirculating ball-bearing type, to minimise friction during the vertical cutting movements of the blade-carrying support 14, which will be described hereinafter.

More specifically, each sliding block 21 is respectively fixed (with screws, bolts or other systems) to a first wedge 25 which adjusts the distance between the blades 12, 13 and is coupled with a second opposite wedge 26 fixed to the blade-carrying support 14.

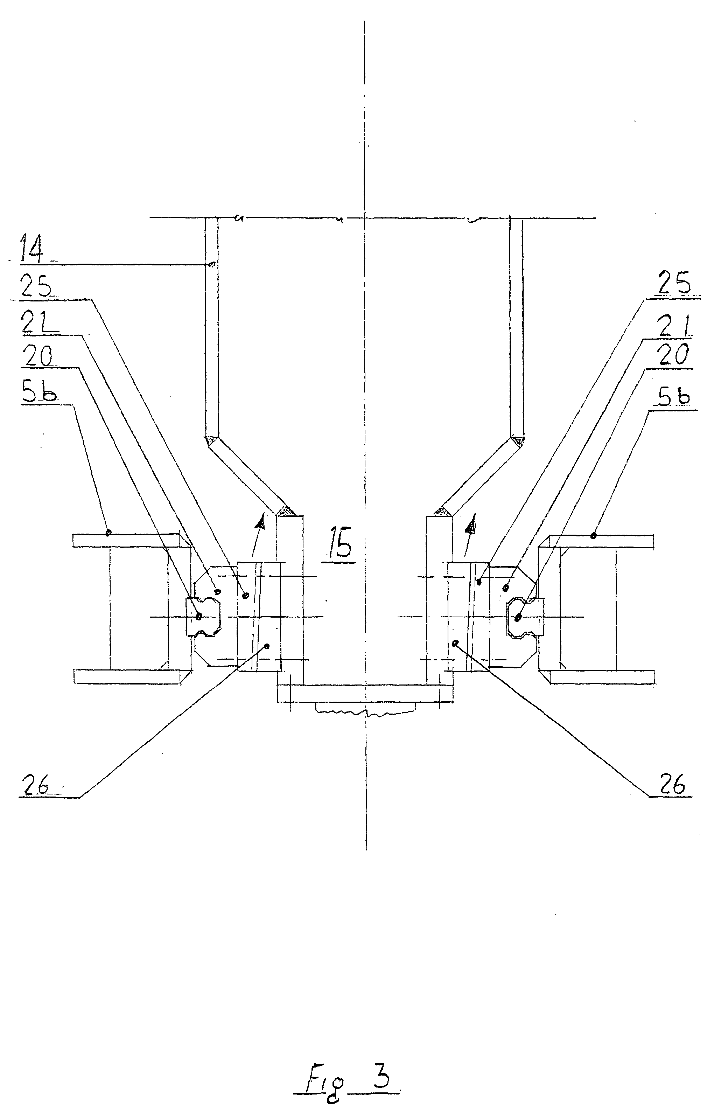

The inclination of the surfaces of the wedges 25 and 26 allows the blade-carrying slide 5 to move horizontally in a direction which corresponds to the angle of said inclination and is indicated with the arrows in Figure 3.

These displacements of the slide depend on those imparted to the plate 9 and have the function of adjusting the distance between the blades, according to the explanation that will be given below; however, during the cutting of the sheet metal, the plate 9 is locked so as to keep the blade-carrying slide 5 suspended in the position required to obtain a predetermined distance between the blades.

The functioning of the shears described above is now explained.

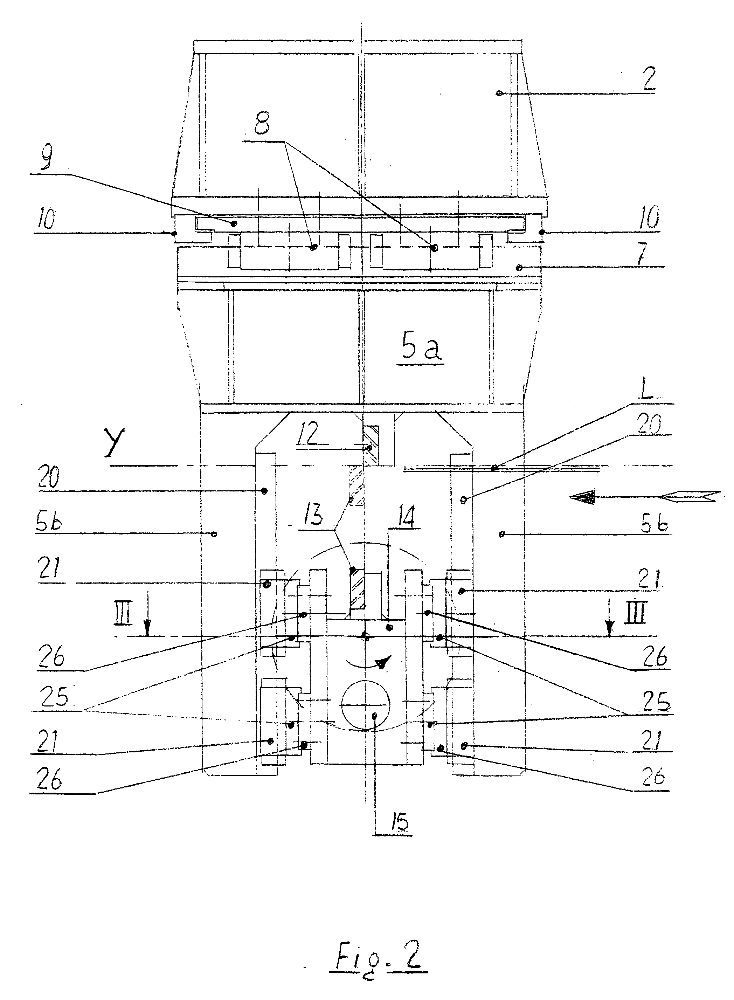

Sheet metal L to be cut is fed along the direction Y of Figure 2 as indicated by the arrow and arrives in the cutting zone where it meets first the upper blade 12; in said zone the sheet metal is preferably guided by receiving means not shown in the drawings.

In this step the cam mechanisms 15 are operative and, as a result of this, the blade-carrying support 14 (with the associated blade 13) moves along a circular trajectory having a radius equal to the eccentricity of the actuating motion.

The displacement of the blade-carrying support 14 causes the associated blade 13 to move from a lower position corresponding to the position in Figure 2, where said blade is removed from the other blade 12, towards an upper end-of-cut position (shown schematically by broken line in Fig. 2) where its cutting edge reaches a higher than that of the cutting edge of the blade 12.

The vertical movement of the blade-carrying support 14 is guided by the sliding blocks 21 which are integral therewith and slide along the guides 20 present on the columns 5b of the blade-carrying slide 5.

At the same time, the displacement of the blade-carrying support 14 is transmitted to the columns 5b and makes the blade-carrying slide 5 to move back and forth along the horizontal direction Y: this is made possible by the sliding coupling between the rails 7 and the suspension sliding blocks 8 fixed to the plate 9.

In short it can be said that in this example of the invention, the kinematic system formed by the blade-carrying support 14 slidable with respect to the columns 5b owing to the sliding blocks 21 and the guides 20, is a kind of link-block mechanism which allows the rotary movement of the actuating cam mechanisms 15 to be converted into an alternating horizontal linear movement of the slide 5, along the direction Y.

Since the upper blade 12 is fixed to the slide, said blade is also horizontally movable in an alternating manner and its movements are synchronous with those of the lower blade-carrying support 14, given that the latter actuates the slide 5; as a result, the only relative movement between the blades 12 and 13 of the shear is a movement in the vertical direction, which has the function of cutting the sheet metal.

In order to obtain an optimum cutting action, the horizontal speed of the blades is synchronised with the feed speed of the sheet metal to be cut; for this purpose, the rotation of the motor 18 is regulated at each revolution in such a way that, during the cut, the horizontal speed component of the blades is equal to the feed speed of the sheet metal.

This type of adjustment and the means required to perform it are already known in the art and will therefore not be described in further detail here.

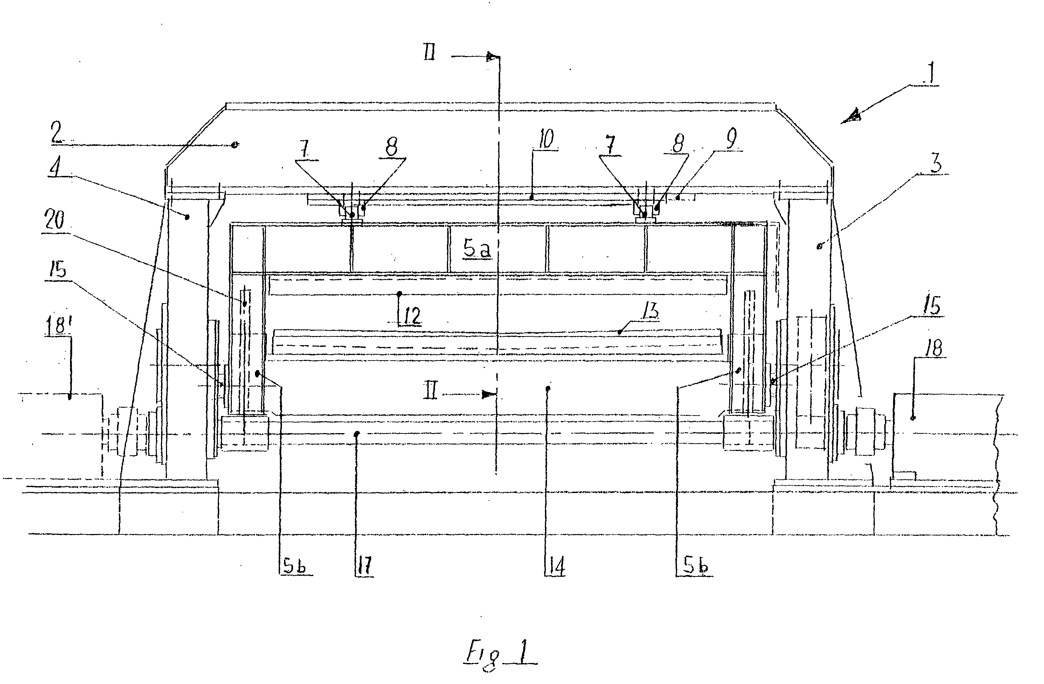

However, in this connection it can be noted that as the lower blade 13 of this example is cusp-shaped (see Fig. 1), the sheet metal is cut from its outer edges towards the centre; of course, this blade might however be of the inclined type, so as to perform the cut transversely from one side of the sheet metal to the other.

When it is required to perform adjustment of the distance in a horizontal direction between the blades 12 and 13, the plate 9 is unlocked from the preceding position and is displaced with respect to the beam 2 (as shown by a broken line in Fig. 1) along the supports 10; following to this displacement and to the action of the wedges 25, 26 deriving therefrom, the blade-carrying slide 5 moves along the rails 7 and the resultant of its displacements, shown by the arrows in Figure 3, is parallel to the inclined surface of the wedges.

In this manner, the position of the blade-carrying slide 5 is adjusted with respect to that of the lower blade-carrying support 14 along the horizontal direction Y, so as to vary the distance in said direction between the upper blade 12 on the slide and the lower blade 13 on the blade-carrying support 14.

In this connection it just has to be pointed out that the upper blade 12 is, of course, longer than the lower blade 13 by a quantity equal to at least the maximum transverse travel of the plate 9 intended for adjustment.

As can be appreciated, that adjustment does not therefore require any actuator arranged close to the proximity of the blades and controlled remotely with electrical energy or the like, as occurs instead for known adjusting devices; in this way, all the connections required for said devices have therefore been eliminated, with the advantages of safety and reliability arising therefrom.

From the above description, it is therefore possible to understand how the shear according to the invention achieves the object set out in the beginning.

First of all it should be pointed out that the cutting operation is performed without long displacements of the blades, as instead occurs in known shears of the flying type; this makes it possible to have a compact cutting machine likewise rotating machines, with the associated advantages thereof.

This result is obtained, however, without the problems of rotating machines.

Indeed, the shear of the present invention makes of only one blade mounted on a movable blade-carrying support with cam mechanisms, while the other blade is fixed on the slide 5: in this manner all the mechanical transmission members, which in rotating shears have the function of synchronising the movements of the two blade-carrying supports actuated with eccentric cams mechanisms, have been eliminated.

This implies a reduction of the rotating masses and therefore also in the power required to set them into rotation which is delivered by the motor 18; said reduction is also favoured by the methods with which the cut is obtained.

Indeed, in the shear 1 of this example the cut is completed when the cutting edge of the lower blade 13 penetrates through the entire thickness of the sheet metal, given that the upper blade 12, being vertically stationary with respect to the sheet metal, only has the function of opposing the action of the lower blade.

In the same conditions (angle of the inclined blade, thickness of the sheet metal and the feed speed thereof, etc.) it is therefore possible to perform the cut in a longer lapse of time than in the case of rotating shears having two eccentrically movable blade-carrying supports; thus, the cutting power required (intended as the energy to be applied during the time when the cut occurs) is therefore smaller in the shears according to the invention.

As a further corollary, it should be emphasized how the shear of the invention is suitable for carrying out the cut during an angle of rotation of the lower blade-carrying support 14, wider than the angle of rotation of the two blade-carrying supports of known shears; in this manner a more gradual cutting action, which reduces impact phenomena that generate noise and wear of the blades, is obtained.

Owing to these effects it is therefore possible to design the whole actuating system of the single blade-carrying support 14 (i.e. the eccentric cam mechanisms 15, the shaft 17, the motor 18, the electric apparatus, the various reduction gears, etc.), more cheaply than in rotating shears having equivalent performance.

Last, it should also be pointed out how in the example considered, the particular arrangement of the blades allows to cut sheet metal whose leading edge does not risk to scratch the surface of the sheet metal already cut and stacked downstream of the shear itself.

This is made possible by the fact that the sheet metal to be cut encounters the upper blade 12 first and then the lower blade 13 which moves with an ascending motion; in this way the sheet metal is cut by applying on its leading edge, an action which tends to direct it upwards. This phenomenon is also referred to as the so-called "burr".

The finished sheet obtained with the subsequent cut, can therefore be stacked downstream of the shear on the other sheets cut previously, letting it to slide thereon without the risk of its leading edge scratching the surface thereof.

Naturally, variations of the invention with respect to the above description should not be excluded.

First of all it should be pointed out that the arrangement of the blades could be inverted with respect to that considered above; indeed, nothing would prevent to build a shear wherein the blade-carrying slide 5 with the associated blade 12 fixed thereon, is arranged at the bottom while the blade-carrying support which moves eccentrically is located above.

In other words, in this case the blade-carrying slide 5 would no longer be suspended from the bridge-like structure of the shear but would be simply placed (in an inverted upside-down position with respect to the position shown in the drawings) on wheels, trolleys, sliding blocks or the like, engaging rails provided on the ground or on a base; the methods of performing the cut and the operating principles of the shears would, however, remain unchanged with respect to what has been explained above.

Likewise, other solutions can be found for the methods with which the blade-carrying slide 5 is supported by the bridge-like load-bearing structure; indeed, it is clear that in order to make the slide movable in the direction Y, use can be made of a wide range of other systems, installed in other positions with respect to that of the rails 7 and the sliding blocks 8.

The upper positioning of said sliding blocks (i.e. fixed to the plate 9) with respect to the rails 7 is preferable in the example considered, because the sliding blocks 8 are of the recirculating ball-bearing type; in this position, their lubricating oil stops under gravity in the area where the ball bearings slide along the corresponding rail, thereby ensuring that the system functions correctly.

On the contrary, in the inverted upside-down configuration which was mentioned above, wherein the blade-carrying slide 5 is located at the bottom and the moving blade-carrying support 14 at the top, for the same reasons of lubrication it is convenient to place the sliding blocks 8 on said blade-carrying slide and the rails on the base or on the floor.

More generally it can be said that for supporting the blade-carrying slide 5 in the load-bearing structure of the shear, different solutions can be used depending on various factors, among which there are the types of means provided for moving the slide in the direction of feeding Y of the sheet metal.

However, the suspension (or supporting, in the reversed condition) of the longitudinal member at intermediate points instead of at its ends or along the columns 5b, is preferable because it allows the structure thereof to be lightened, the maximum stresses to be compensated during cut remaining the same.

Furthermore it is evident that also as regards the methods of actuating the blade-carrying support, it is possible to devise different alternatives with respect to what has been explained.

First of all it should be pointed out that the reference to the eccentric cam mechanisms above, encompasses all the mechanisms suitable for obtaining the displacement of the blade-carrying support 14 according to the given explanation; moreover, said mechanisms and the displacement obtained by them are already well-known in the state of the art and therefore they will not be further considered here, since reference can be made to the existing embodiments and publications (for example the abovementioned Italian patent).

Secondly it should be considered that two motors may also be used in order to actuate the abovementioned cam mechanisms, instead of the single one shown in the preceding example.

The second motor (indicated by 18' in Fig. 1 where it has been drawn in broken lines) can in fact be installed at the opposite end of the shaft 17, with respect to the end where the motor 18 is installed; in this way a symmetrical configuration of the actuating system of the blade-carrying support 14 is achieved with an improved functionality and precision of movements.

Furthermore, in this case it can be noted that the shaft 17 which connects the two motors allows the rotors thereof to be made integral with each other, thereby synchronising the respective rotations in such a way that it becomes possible to use a single control system for both motors, thus obtaining an advantageous simplification from this point of view, in addition to an obvious saving.

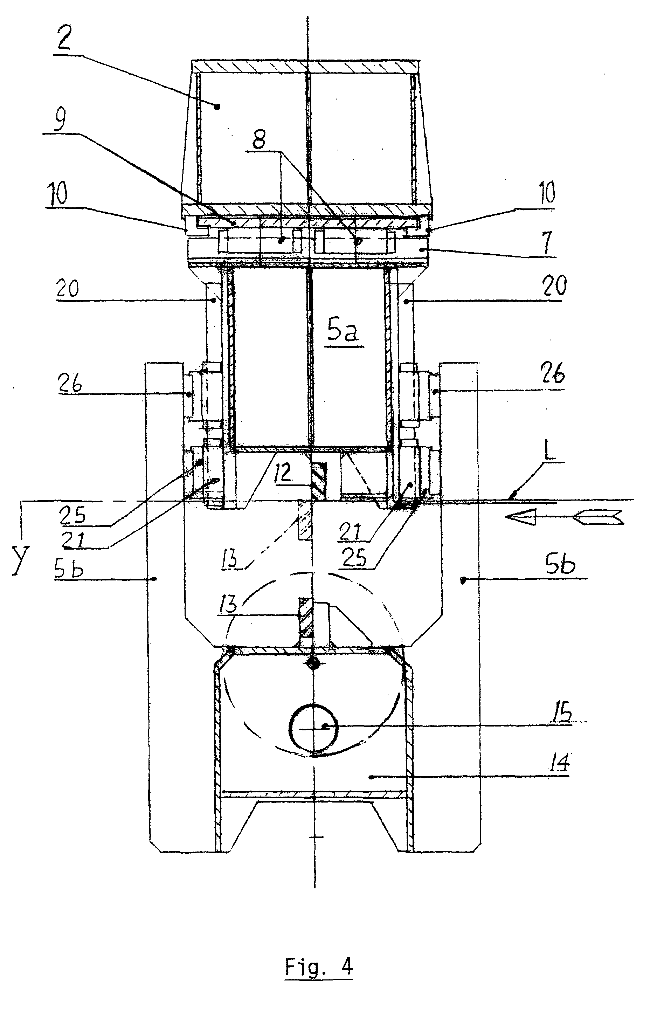

Last, it is important to consider a further possible embodiment of the shear according to the invention, which allows the functions of structural elements thereof to be better understood; such an embodiment is shown in Figure 4, wherein the same numbering of the parts structurally or functionally common to the preceding example has been retained.

As can be seen, this version of the shear differs from the other one in that the columns 5b are now integral with the lower blade-carrying device 14, while the wedges 25, 26 and the sliding blocks 21 are provided on the upper end thereof; said sliding blocks are slidable along the guides 20 provided on the blade-carrying slide 5, which is now only formed by the longitudinal member 5a.

The functioning of the shear is nonetheless similar to that already explained above, in the sense that the lower blade-carrying support 14 actuated by the cam mechanisms 15, is displaced and the movement thereof is transmitted in a horizontal direction (i.e. in the direction Y) to the blade-carrying slide 5, which moves back and forth with respect to the suspension sliding blocks 8 coupled to the rails 7.

A similar variation of the invention allows to obtain a lighter blade-carrying slide 5 than that of the first example, although it involves corresponding increase in weight of the lower blade-carrying support 14.

Alternatives may also be devised for this further embodiment of the shear.

It just has to be pointed out, for example, that the arrangement of the guides 20 can be inverted with respect to that of Figure 4, in the sense that they can be mounted on the columns 5b instead of on the longitudinal member 5a of the slide 5, while the opposite will occur for the sliding blocks 21 coupled thereto.

More generally, it should be said that either for this last variation and for all the other embodiments, the configuration of the means for guiding the vertical cutting movement between the blade-carrying slide 5 and the lower blade-carrying support 14 can be extremely varied and will also depend on the different methods chosen for adjusting the position of the blades 12 and 13.

Indeed the solutions considered heretofore are extremely suitable for adjustment with the wedges 25 and 26 because the pairs of columns 5b present at the ends of the longitudinal member 5a (or of the blade-carrying support 14) allow the wedges to be kept in opposite positions; however, in the case said wedges were absent (because for example adjustment of the blades is not desired or because said adjustment is obtained in another way), it would then be possible to have a single column 5b between each end of the slide 5 and of the blade-carrying support 14, likewise it occurs nowadays in some known shears having double cams (see, for example, the shear described in another Italian Patent, the No. 1,217,570).

In such a case the columns could be cylindrical and the sliding blocks replaced with sleeves, which are also cylindrical and slidable along the columns, so that in this solution the columns would further assume the function of guides thereby dispensing for the guides 20 of the examples described.

All these and other possible variations nonetheless fall within the scope of the following claims.

## Claims

1. Shear for cutting sheet metal and the like, comprising a blade-carrying support (14) displaced along a circular trajectory thereby imparting a cutting movement to a first blade (13) present thereon,
- a second blade (12) opposite to the first one, arranged on a slide (5) movable back and forth in a direction (Y) transverse to the blades,
- at least one column (5b) in connection with each end of the blades and extending between the slide and the blade-carrying support, integral with one of them and movable longitudinally with respect to the other,
- guiding means (20, 21) for guiding the relative movement between the columns and the slide or the blade-carrying support which is movable with respect thereto, thereby making the blade-carrying slide to move back and forth in the abovementioned direction (Y) transverse to the blades, as a result of the displacements of the blade-carrying support transmitted by the columns, **characterized in that** it comprises two pairs of columns (5b) situated on opposite sides with respect to the blades (12, 13) and adjusting wedges (25, 26) provided in the region of said guiding means (20, 21) associated with the columns, wherein the slide is also displaceable in a direction parallel to the blades in order to adjust the distance between them as a result of their displacement guided by the wedges.

2. Shear according to Claim 1, wherein the guiding means associated with the columns comprises sliding blocks (21) and guides (20) along which said sliding blocks slide.

3. Shear according to Claim 2, wherein the blade-carrying slide (5) comprises a longitudinal member (5a) where said second blade (12) and two pairs of columns (5b) are mounted, which columns are fixed on opposite sides of said longitudinal member and between which the blade-carrying support (14) is guided in a sliding manner.

4. Shear according to Claim 3, wherein the longitudinal member (5a) of the blade-carrying slide (5) is suspended from a load-bearing structure (2, 3, 4) or supported on a base, slidably in a direction transverse to the blades (12, 13) at intermediate points of its longitudinal extension.

5. Shear according to Claim 4, wherein the longitudinal member (5a) is suspended or supported by means of sliding blocks (8) which are slidable along rails.

6. Shear according to Claim 4 or 5, wherein the longitudinal member (5a) is suspended from a plate (9) which is slidable with respect to the load-bearing structure (2, 3, 4) in a direction parallel to the blades (12, 13), in order to obtain adjustment of the distance between said blades with the associated wedges (25, 26).

7. Shear according to Claim 6, wherein the blade (12) on the longitudinal member (5a) is longer than the blade (13) on the blade-carrying support (14).

8. Shear according to any of the preceding claims, wherein the blade-carrying slide (5) is located above the blade-carrying support (14) and in which the blade (12) present thereon is located upstream of the blade (13) arranged on said support, with reference to the feeding direction of feeding of the material to be cut.

9. Shear according to any of the preceding claims, comprising two electric motors (18) which actuate respective cam mechanisms (15) for actuating the blade-carrying support (14), and a shaft (17) which connects these motors thereby making them integral in rotation.

## Patentansprüche

1. Schere zum Schneiden von Blech und ähnlichem, umfassend ein eine Schneide tragendes Auflager (14), das entlang einer Kreisbahn verschoben wird, wodurch die darauf vorhandene ersten Schneide eine (13) in eine schneidende Bewegung versetzt wird,
- eine zweite Schneide (12) gegenüber der ersten, die an einem Gleitstück (5) angeordnet ist, das sich in einer Richtung (Y) quer zu den Schneiden hin und her bewegen kann,
- mindestens eine Säule (5b), in Verbindung mit jedem Ende der Schneiden und die sich zwischen dem Gleitstück und dem die Schneiden tragenden Auflager erstreckt, ein integraler Bestandteil von einem von diesen ist und in Längsrichtung, bezogen auf das andere beweglich ist,
- Führungsteile (20, 21), die die relative Bewegung zwischen den Säulen und der Schneide oder dem die Schneide tragenden Auflager, das in Bezug auf diese beweglich ist, führen, wodurch das die Schneide tragende Gleitstück dazu gebracht wird, daß es sich in der oben erwähnten Richtung (Y) quer zu den Schneiden hin und her bewegt, als Resultat der Verschiebung des die Schneiden tragenden Auflagers, die durch die Säulen übertragen wird, **dadurch gekennzeichnet, daß** sie zwei Säulenpaare (5b) umfaßt, die auf gegenüberliegenden Seiten, bezogen auf die Schneiden (12, 13), liegen, und Einstellkeilen (25, 26), die in dem Bereich der Führungsteile (20, 21) vorgesehen sind, die mit den Säulen verbunden sind, wobei das Gleitstück auch in einer Richtung parallel zu den Schneiden verschoben werden kann, um den Abstand zwischen ihnen einzustellen als Resultat ihrer durch die Keile geführten Verschiebung.

2. Schere nach Anspruch 1, wobei die Führungsteile, die mit den Säulen verbunden sind, Gleitschuhe (21) und Gleitbacken (20), entlang denen die Gleitschuhe leiten, umfassen.

3. Schere nach Anspruch 2, wobei das die Schneide tragende Gleitteil (5), ein Längsteil (5a) umfaßt, an dem die zweite Schneide (12) und zwei Säulenpaare (5b) befestigt sind, wobei die Säulen an gegenüber liegenden Seiten des Längsteils befestigt sind und zwischen denen das die Schneide tragende Auflager (14) in gleitender Weise geführt wird.

4. Schere nach Anspruch 3, wobei das Längsteil (5a) des die Schneide tragenden Gleitteils (5) gleitfähig in Querrichtung zu den Schneiden (12, 13) an Zwischenpunkten entlang seiner Längsrichtung an einer Last-tragenden Struktur (2, 3, 4) aufgehängt ist oder von einer Grundlage getragen wird.

5. Schere nach Anspruch 4, wobei das Längsteil (5a) mit Hilfe von Gleitschuhen, die entlang Schienen gleiten können, aufgehängt ist oder getragen wird.

6. Schere nach Anspruch 4 oder 5, wobei das Längsteil (5a) an einer Platte (9) aufgehängt ist, die in Bezug auf die Last-tragende Struktur (2, 3, 4) in einer Richtung parallel zu den Schneiden (12, 13) gleiten kann, um eine Einstellung des Abstands zwischen den Schneiden mit den damit verbundenen Keilen zu erreichen.

7. Schere nach Anspruch 6, wobei die Schneide (12) auf dem Längsteil (5a) länger ist als die Schneide (13) auf dem die Schneide tragenden Auflager (14).

8. Schere nach einem der vorangehenden Ansprüche, wobei sich das die Schneide tragende Gleitstück (5) oberhalb des die Schneide tragenden Auflagers (14) befindet und wobei die darauf vorhandene Schneide (12), sich in Bezug auf die Zufuhrrichtung des zu schneidenden Materials stromaufwärts der Schneide (13) befindet, die auf dem Auflager angeordnet ist.

9. Schere nach einem der vorangehenden Ansprüche, umfassend zwei Elektromotoren (18), die jeweils Kurvengetriebe (15) antreiben, zum Antrieb des die Schneide tragenden Auflagers (14) und eine Welle (17), die diese Motoren miteinander verbindet,, wodurch sie sich gleichmäßig (integral) bewegen.

## Revendications

1. Cisaille pour couper des tôles ou produits similaires, comprenant un support de lame (14) déplacé le long d'une trajectoire circulaire, imprimant ainsi un mouvement de découpe à une première lame (13) présente sur celui-ci,
- une seconde lame (12) opposée à la première, agencée sur un coulisseau (5) amovible d'arrière en avant dans une direction (Y) transversale par rapport aux lames,
- au moins une colonne (5b) en connexion avec chaque extrémité des lames et s'étendant entre le coulisseau et le support de lame, intégrale avec l'un d'entre eux et amovible de manière longitudinale par rapport à l'autre,
- des moyens de guidage (20, 21) pour guider le mouvement relatif entre les colonnes et le coulisseau ou le support de lame qui est amovible par rapport à celles-ci, entraînant ainsi le support de lame à se déplacer d'arrière en avant dans la direction (Y) mentionnée ci-dessus transversale par rapport aux lames, en résultat des déplacements du support de lame transmis par les colonnes, **caractérisée en ce qu'**elle comprend deux paires de colonnes (5b) situées sur des côtés opposés par rapport aux lames (12, 13) et des cales de réglage (25, 26) prévues dans la zone desdits moyens de guidage (20, 21) associés aux colonnes, dans laquelle le coulisseau peut également être déplacé dans une direction parallèle aux lames afin de régler la distance entre elles en résultat de leur déplacement guidé par les cales.

2. Cisaille selon la revendication 1, dans laquelle les moyens de guidage associés aux colonnes comprennent des coulisseaux à articulation (21) et des guides (20) le long dudit coulisseau à coulisseaux à articulation.

3. Cisaille selon la revendication 2, dans laquelle le coulisseau support de lame (5) comprend un élément longitudinal (5a) sur lequel ladite seconde lame (12) et deux paires de colonnes (5b) sont montées, lesquelles colonnes sont fixées sur des côtés opposés dudit élément longitudinal et entre lesquelles le support de lame (14) est guidé par glissement.

4. Cisaille selon la revendication 3, dans laquelle l'élément longitudinal (5a) du coulisseau support de lame (5) est suspendu à partir d'une structure porteuse (2, 3, 4) ou supporté sur une base, par glissement dans une direction transversale par rapport aux lames (12, 13) à des points intermédiaires de son extension longitudinale.

5. Cisaille selon la revendication 4, dans laquelle l'élément longitudinal (5a) est suspendu ou supporté à l'aide de coulisseaux à articulation (8) qui sont amovibles le long de rails.

6. Cisaille selon la revendication 4 ou 5, dans laquelle l'élément longitudinal (5a) est suspendu à partir d'une plaque (9) qui est amovible par rapport à la structure porteuse (2, 3, 4) dans une direction parallèle aux lames (12, 13), afin de parvenir à un réglage de la distance entre lesdites lames avec les cales associées (25, 26).

7. Cisaille selon la revendication 6, dans laquelle la lame (12) sur l'élément longitudinal (5a) est plus longue que la lame (13) sur le support de lame (14).

8. Cisaille selon l'une quelconque des revendications précédentes, dans laquelle le coulisseau support de lame (5) est situé au-dessus du support de lame (14) et dans laquelle la lame (12) présente sur celui-ci est située en amont de la lame (13) agencée sur ledit support, en faisant référence à la direction d'alimentation du matériau à découper.

9. Cisaille selon l'une quelconque des revendications précédentes, comprenant deux moteurs électriques (18) qui actionnent les mécanismes de came respectifs (15) pour actionner le support de lame (14), et un arbre (17) qui raccorde ces moteurs, les rendant ainsi intégraux lors de la rotation.
